# EUROPEAN PATENT APPLICATION

(11) **EP 3 482 929 A1**
(43) Date of publication of application: **15.05.2019**
(21) Application number: 17201298.1
(22) Date of filing: 13.11.2017
(51) Int. Cl.: B32B 27/08, B32B 27/32

(54) **POLYMERIC FILMS FOR IN-MOULD LABELS**

(71) Applicant: Polilux Plastik Film Sanayi Ve Ticaret A.S., 59930 Tekirdag (TR)
(72) Inventor: CAMBER, Hasan, 59930 TEKIRDAG (TR); CAKIRLAR, Orhan, 59930 TEKIRDAG (TR)
(74) Representative: Inal, Aysegul Seda

(57) **Abstract**

This invention is related with polymeric films for use as in-mould labels wherein films have increased stiffness to prevent curling.

## Description

### Technical field of the Invention

This invention is related with polymeric films for use as in-mould labels wherein films have increased stiffness to prevent curling.

### Background of the Invention

In prior art, films that are used for in-mould labes result in curling of the film. Curling leads to label fold and/or the label failing to be correctly incorporated into the articles, containers lids and other surfaces.

EP 0 862 991 B1 discloses a film as an in-mould label, wherein the label is made from a biaxially oriented polymeric film comprising a core layer of a voided propylene homopolymer having a density of not more than 0.70 g/cm3, and at least one substantially non-voided layer on each surface of the core layer, the ratio of the combined thicknesses of the non-voided layers on the respective surfaces of the core layer being from 2:1 to 1:1, wherein said core layer and said at least substantially non-voided layers have been coextruded.

### Detailed Description of the Invention

Present invention is a film comprises 5 layers, core layer, inner layers at both sides of core layer and skin layers as outermost layers, to increase ability to generate static electricity. This is provided by using hydrocarbon resin and/or High Crystalline Polipropilen homopolymer in the core and inner layers.

Core layer and inner layers comprises Hydrocarbon resin and/or high crystalline polipropilen homopolymer in amount of 20-40% by weight, to increase stiffness of the label film. Hydrocarbon resin and/or high crystalline polipropilen homopolymer are surprisingly provide stiffness between these amounts because below 20% no stiffness is obtained and above 40% physical properties of label are changes.

It is optional that skin layers also comprise 10-20% by weight hydrocarbon resin and/or high crystalline polipropilen homopolymer.

These amounts of Hydrocarbon resin and/or high crystalline polipropilen homopolymer, eliminate dependency to layer thickness. In prior art, layers to provide stiffness should be in certain thickness. However the invention provides the stiffness in every thickness.

Preferably, TiO₂ is used in at least one layer, to provide white color, in amount of 1-10% by weight. Aditionally, one or more layers can include additives such as antiblock agents, and/or antistatic agents. Examples of antiblock agents which can be used include syntehetic silica or organic materials.

### Example:

**Skin Layer 1:**

| | |
|---|---|
| thickness | 1.5µm |
| Terpolymer | 98% |
| synthetic silica and/or other organic antiblock agent | 2% |

**Inner Layer 1:**

| | |
|---|---|
| thickness | 5µm |
| polipropilen homopolymer | 65% |
| Hydrocarbon resin | 35% |

**Core Layer:**

| | |
|---|---|
| thickness | 46.5µm |
| polipropilen homopolymer | 45% |
| Hydrocarbon resin or High crystalline polipropilen homopolymer | 35% |
| Calcium Carbonate | 20% |

**Inner Layer 2:**

| | |
|---|---|
| thickness | 5µm |
| polipropilen homopolymer | 55% |
| TiO₂ and or calcium carbonate | 10% |
| Antistatic agent | 5% |
| Hydrocarbon resin or High crystalline polipropilen homopolymer | 30% |

**Skin Layer 2:**

| | |
|---|---|
| thickness | 2µm |
| Terpolymer and HDPE (high dencity polyethylene) | 100% |

Total film thickness can be 50 -80 µm.

Films in accordance with the present invention can be produced by known methods. However, preferrably coextrude melts of the respective polymers through a slot die and then after cooling to stretch the resulting polymer web sequentially. The biaxially oriented film was cooled, subjected to corona discharge treatment on both surfaces, and then wound up.

## Claims

1. I n-mould labels wherein the lables is made from polymeric films **characterized in** comprising 5 layers of core layer, inner layers at both sides of core layer and skin layers as outermost layers wherein core layer and inner layers comprises 20-40% by weight hydrocarbon resin and/or High Crystalline Polipropilen homopolymer.

2. In-mould label according to claim 1 **characterized in that** skin layers comprises 10-20% by weight hydrocarbon resin and/or high crystalline polipropilen homopolymer.

3. In-mould label according to claim 1 cahracterized in that core layer further comprises calcium carbonate.

4. In-mould label according to claim 1 **characterized in that** at least one layer comprises TiO₂.

5. In-mould label according to claim 1 **characterized in that** at least one layer comprises antiblock agent or antistatic agent.

6. In-mould label according to claim 1 **characterized in that** total film thickness is 50-80µm.
